# EUROPEAN PATENT SPECIFICATION

(11) **EP 3 825 149 B1**
(45) Date of publication and mention of the grant of the patent: **07.06.2023**
(21) Application number: 20208175.8
(22) Date of filing: 17.11.2020
(51) Int. Cl.: B60C 9/26

(54) **REDUCED WEIGHT AIRCRAFT TIRE**
FLUGZEUGREIFEN MIT REDUZIERTEM GEWICHT
PNEU D'AÉRONEF À POIDS RÉDUIT

(30) Priority: 19.11.2019 US 201916687735; 19.11.2019 US 201916687747
(43) Date of publication of application: 26.05.2021
(73) Proprietor: The Goodyear Tire & Rubber Company, Akron, OH 44316 (US)
(72) Inventor: UEYOKO, Kiyoshi, Copley, OH 44321 (US)
(74) Representative: Kutsch, Bernd

(56) References cited:
- EP-A1- 2 394 822
- US-A- 4 934 428
- US-A1- 2005 194 081
- US-A1- 2017 057 292

## Description

### Field of the Invention

This invention relates to pneumatic tires having a carcass and a belt reinforcing structure, more particularly to high speed heavy load tires such as those used on aircraft.

### Background of the Invention

Pneumatic tires for high speed applications experience a high degree of flexure in the crown area of the tire as the tire enters and leaves the area of the footprint. This problem is particularly exacerbated on aircraft tires wherein the tires can reach speed of over 320 km/h at takeoff and landing.

When a tire spins at very high speeds the crown area tends to grow in dimension due to the high angular accelerations and velocity, tending to pull the tread area radially outwardly. Counteracting these forces is the load of the vehicle which is only supported in the small area of the tire known as the footprint area.

Current tire design drivers are an aircraft tire capable of high speed, high load and with reduced weight. It is known in the prior art to use zigzag belt layers in aircraft tires, see US-5,427,167. Zigzag belt layers have the advantage of eliminating cut belt edges at the outer lateral edge of the belt package. The inherent flexibility of the zigzag belt layers also helps improve cornering forces. However, a tire designed with zigzag belt layers cannot carry as heavy a load as required by current commercial aircraft design requirements. Further, there is generally a tradeoff between load capacity and weight. Thus, an improved aircraft tire is needed, which is capable of meeting high speed, high load and with reduced weight.

US-A-2017/057292 describes a tire in accordance with the preamble of claim 1.

US 4,934,428 disclosed an aircraft tire having a rubber cushion layer between the protector belt structure and the radially inner belt layer.

### Summary of the Invention

The invention relates to a tire in accordance with claim 1.

Dependent claims refer to preferred embodiments of the invention.

In one aspect of the invention, a pneumatic tire is disclosed. having a carcass and a belt reinforcing structure, the belt reinforcing structure comprising a main belt structure including a first belt layer having cords arranged at an angle of 10 degrees or less, preferably 5 degrees or less, with respect to the midcircumferential plane of the tire, and a first zigzag belt reinforcing structure, the first zigzag belt reinforcing structure being formed of or comprising at least two layers of cords, the cords in said at least two layers of cords being inclined at an angle in a range of from 5 to 30 degrees relative to the midcircumferential plane of the tire extending in alternation to turnaround points at each lateral edge of the respective layer of cord, wherein the first zigzag belt reinforcing structure is wider than the first belt layer, wherein the belt reinforcing structure comprises a protector belt structure located radially outward of the main belt structure, and wherein the protector belt structure is a geodesic belt.

Preferably, the belt reinforcing structure further comprises an auxiliary belt structure located radially outward of the main belt structure, wherein the auxiliary belt structure is a zigzag belt, and wherein the protector belt structure is located radially outward of the auxiliary belt structure.

Preferably, the first zigzag belt reinforcing structure is located radially outward of the first belt layer.

Preferably, the first belt layer is formed from helically winding the cords or comprises helically wound cords.

Preferably, the protector belt structure is formed of nylon cords or comprises nylon cords or is formed of a merged cord of nylon and aramid or comprises a merged cord of nylon and aramid. Alternatively, the protector belt structure is formed of aramid cords or comprises aramid cords or is formed of aramid and nylon cords or comprises aramid and nylon cords. In a preferred embodiment, the protector belt structure is formed of one aramid and two nylon cords or comprises one aramid and two nylon cords.

Preferably, the auxiliary belt structure is formed of nylon cords or comprises nylon cords or is formed of a merged cable of two nylon cords and one aramid cord or comprises a merged cable of two nylon cords and one aramid cord.

Preferably, the main belt structure is formed of a merged cable of two aramid cords and one nylon cord or comprises a merged cable of two aramid cords and one nylon cord.

Preferably, there is a cushion layer between the protector belt structure and the auxiliary belt structure. Preferably, the cushion layer is formed of a relatively stiff rubber having a modulus of elasticity in a range of from 19 to 22 MPa.

The tire is preferably an aircraft tire or a radial aircraft tire.

### Definitions

"Carcass" means the tire structure apart from the belt structure, tread, undertread, and sidewall rubber over the plies, but including the beads.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Ply" means a continuous layer of rubber-coated parallel cords.

"Radial" and "radially" mean directions radially toward or away from the axis of rotation of the tire.

"Radial-ply tire" means a belted or circumferentially-restricted pneumatic tire in which the ply cords which extend from bead to bead are laid at cord angles between 65° and 90° with respect to the equatorial plane of the tire.

Brief Description of the Drawings

The invention will be described by way of example and with reference to the accompanying drawings in which:
FIG. 1 is a schematic cross-sectional view of a first embodiment of half of a tire according to the invention;
FIG. 2 is a close-up view of the belt package of Fig. 1; and
FIG. 3 is a schematically enlarged top view of a geodesic protector belt.

### Detailed Description of Example Embodiments of the Invention

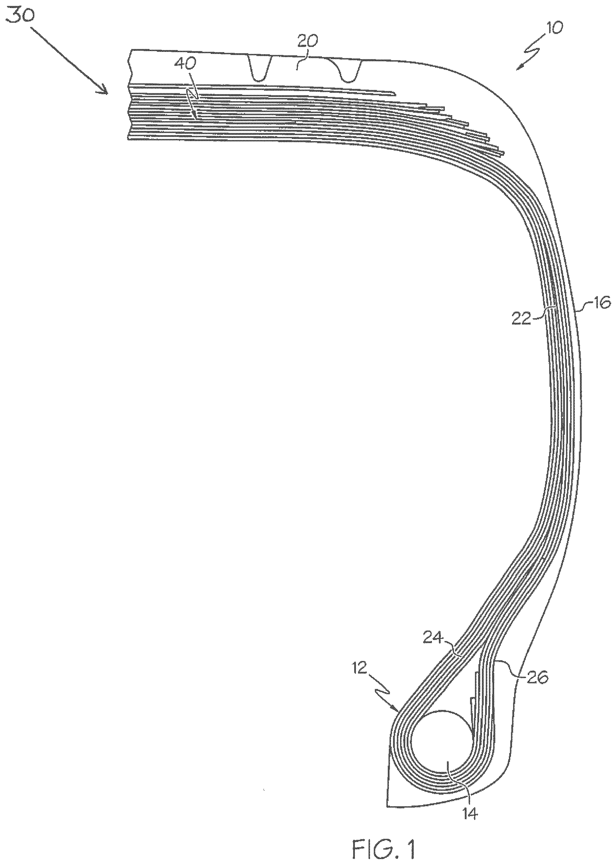

FIG. 1 illustrates a cross-sectional view of one half of a tire 10, namely a radial aircraft tire 10, of the present invention. The tire is symmetrical about the mid-circumferential plane so that only one half is illustrated. As shown, the aircraft tire 10 comprises a pair of bead portions 12 each containing a bead core 14 embedded therein. One example of a bead core suitable for use in an aircraft tire is shown in US-B-6,571,847. The bead core 14 preferably has an aluminum, aluminum alloy or other light weight alloy in the center portion surrounded by a plurality of steel sheath wires. A person skilled in the art may appreciate that other bead cores may also be utilized.

The aircraft tire 10 further comprises a sidewall portion 16 extending substantially outward from each of the bead portions 12 in the radial direction of the tire, and a tread portion 20 extending between the radially outer ends of the sidewall portions 16. Furthermore, the tire 10 is reinforced with a carcass 22 toroidally extending from one of the bead portions 12 to the other bead portion 12. The carcass 22 preferably comprises inner carcass plies 24 and outer carcass plies 26, preferably oriented in the radial direction. Among these carcass plies, typically four inner plies 24 are wound around the bead core 14 from inside of the tire toward outside thereof to form turnup portions, while typically two outer plies 26 are extended downward to the bead core 14 along the outside of the turnup portion of the inner carcass ply 24. Each of these carcass plies 24, 26 may comprise any suitable cord, typically nylon cords such as nylon-6,6 cords extending substantially perpendicular to an equatorial plane EP of the tire (i.e., extending in the radial direction of the tire). Preferably, the nylon cords have an 1890 denier/2/2 or 1890 denier/3 construction. One or more of the carcass plies 24, 26 may also comprise an aramid and nylon cord structure, for example, a hybrid cord, a high energy cord or a merged cord. Examples of suitable cords are described in US-4,893,665, US-4,155,394, or US-6,799,618.

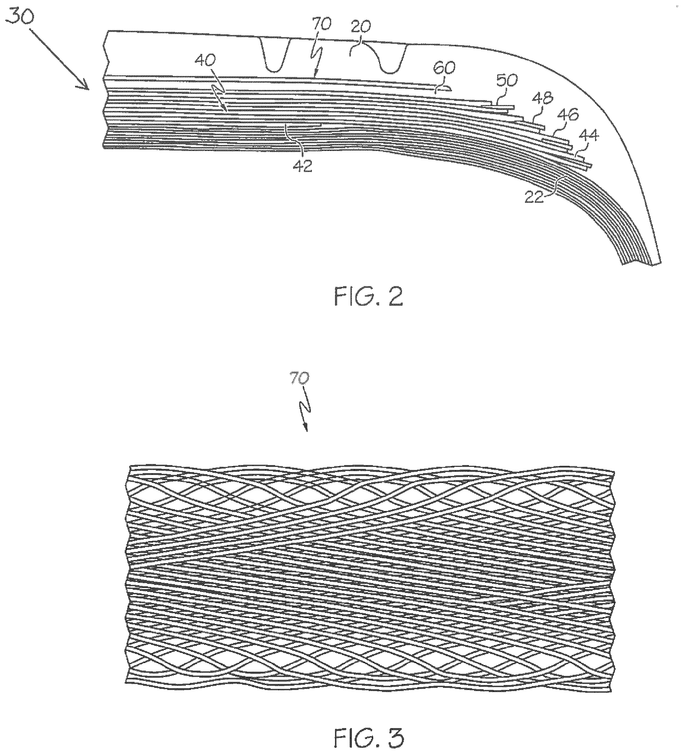

The aircraft tire 10 further comprises a main belt package or structure 40 arranged between the carcass 22 and the tread rubber 20. FIG. 2 illustrates a first embodiment of one half of a belt package 40 suitable for use in the aircraft tire 10. The main belt package 40 is symmetrical about the mid-circumferential plane so that only one half of the main belt package 40 is illustrated. The main belt package 40 as shown comprises a plurality of belt layers located adjacent the carcass 22. The belt layers 44, 46, 48 are preferably arranged to have decreasing width, with the radially outermost belt layer 48 having the least width, and a radially inner belt layer 44 having the greatest width. In addition, there is a radially innermost belt or belt layer 42, which is preferably a low angle belt layer making an angle of less than 10 degrees with respect to the midcircumferential plane (or equatorial plane) of the tire 10. More preferably, the radially innermost belt 42 is angled less than 5 degrees and is helically wound.

The width of the radially innermost belt layer 42 is preferably in the range of 40% to less than 100%, more preferably in the range of from 40% to 95% or from 40% to 70%, of the width of the widest belt in the belt reinforcing structure 30.

In the embodiment shown, the main belt structure 40 includes one or more zigzag belt layers 44. Preferably, there are at least two zigzag belt layers 44, 46. More preferably, there are three zigzag belt layers 44, 46, 48. The angles of the zigzag belt layers 44, 46, 48 respectively in the cords in these layers 44, 46, 48 preferably range from 10 degrees to 40 degrees with respect to the midcircumferential plane (or equatorial plane) of the tire 10. The zigzag belt layers 44, 46, 48 are formed by winding a strip of one or more cords in a zigzag pattern on a drum. The zigzag belt layers are preferably formed from a hybrid or merged cord of nylon and aramid. More preferably, the main belt cord construction is 3000 denier/2 aramid and 1680 denier/1 nylon.

The main belt structure or package 40 further comprises an auxiliary belt layer or structure 50 located radially outward of the main belt structure 50. In a comparative example, the auxiliary belt structure 50 is a zigzag belt layer formed of nylon cords having a 1890 denier/4 cord or a 1890 denier/3 construction. The angles of the cords in the auxiliary belt structure 50 preferably range from 0 degrees to 30 degrees such as 5 to 20 degrees.

In one embodiment, the auxiliary belt structure 50 has a width less than the main belt structure 40. In another embodiment, the width of the auxiliary belt structure 50 is in the range of from 50% to 110%, alternatively 70% to 95% of the width of the widest layer of the main belt structure 40.

A cushion gum layer 60 is located radially outward of the auxiliary belt structure 50. The cushion gum layer 60 is preferably formed from a relatively stiff rubber compound. Preferably, cushion gum layer 60 has a modulus of elasticity in a range of from 19 to 22 MPa or from 20 to 22 MPa.

A protector belt 70 is located radially outward of the cushion gum layer 60.. The protector belt 70 may be formed of nylon but is preferably made of a hybrid or merged cord of nylon and aramid. Preferably, the protector belt 70 is formed of a merged cord of two aramid cords having a 3000 denier/2 construction, and a nylon cord having a 1680 denier/1 cord construction. The two aramid cords and the nylon cord are twisted together to form a merged cord. The protector belt may be a zigzag belt (comparative example) or a geodesic belt (invention). The geodesic belt is shown in FIG. 3 and is made by the process described in US-9,199,512. The geodesic belt is selected to have a dense amount of cords in the crown region of the belt, while sparse amount of cords in the shoulder area.

In this application, a reference to a zigzag belt reinforcing structure preferably means a structure having at least two layers of cords or a ribbon of parallel cords having 1 to 20 cords in each ribbon and laid up in an alternating pattern extending at an angle between 2° and 30°, preferably between 5° and 30° or between 5° and 10°, between lateral edges of the belt layers.

## Claims

1. A pneumatic tire having a carcass (22) and a belt reinforcing structure (30), the belt reinforcing structure (30) comprising a main belt structure (40) including a first belt layer (42) having cords arranged at an angle of 10 degrees or less, preferably 5 degrees or less, with respect to the midcircumferential plane of the tire (10), and a first zigzag belt reinforcing structure (44, 46, 48), the first zigzag belt reinforcing structure being formed of or comprising at least two layers of cords (44, 46, 48), the cords in said at least two layers of cords (44, 46, 48) being inclined at an angle in a range of from 5 to 30 degrees relative to the midcircumferential plane of the tire (10) and extending in alternation to turnaround points at each lateral edge of the respective layer of cord (44, 46, 48), wherein the first zigzag belt reinforcing structure is wider than the first belt layer (42), wherein the belt reinforcing structure comprises a protector belt structure (70) located radially outward of the main belt structure (40), **characterized in that** the protector belt structure (70) is a geodesic belt.

2. The pneumatic tire of claim 1 wherein the belt reinforcing structure (30) further comprises an auxiliary belt structure (50) located radially outward of the main belt structure (40), wherein the auxiliary belt structure (50) is a zigzag belt, and wherein the protector belt structure (70) is located radially outward of the auxiliary belt structure (50).

3. The pneumatic tire of claim 1 or 2 wherein the first zigzag belt reinforcing structure (44, 46, 48) is located radially outward of the first belt layer (42).

4. The pneumatic tire of claim 1 or 2 wherein the first belt layer (42) is formed from helically winding the cords or comprises helically wound cords.

5. The pneumatic tire of at least one of the previous claims wherein the protector belt structure (70) is formed of nylon cords or comprises nylon cords.

6. The pneumatic tire of at least one of the previous claims wherein the protector belt structure (70) is formed of a merged cord of nylon and aramid or comprises a merged cord of nylon and aramid.

7. The pneumatic tire of claim 2 wherein the auxiliary belt structure (50) is formed of nylon cords or comprises nylon cords.

8. The pneumatic tire of claim 2 wherein the auxiliary belt structure (50) is formed of a merged cable of two nylon cords and one aramid cord or comprises a merged cable of two nylon cords and one aramid cord.

9. The pneumatic tire of at least one of the previous claims wherein the main belt structure (40) is formed of a merged cable of two aramid cords and one nylon cord or comprises a merged cable of two aramid cords and one nylon cord.

10. The pneumatic tire of at least one of the previous claims wherein the protector belt structure (70) is formed of aramid cords or comprises aramid cords.

11. The pneumatic tire of at least one of the previous claims wherein the protector belt structure (70) is formed of aramid and nylon cords or comprises aramid and nylon cords.

12. The pneumatic tire of at least one of the previous claims wherein the protector belt structure (70) is formed of one aramid and two nylon cords or comprises one aramid and two nylon cords.

13. The pneumatic tire of at least one of the previous claims wherein there is a cushion layer (60), between the protector belt structure (70) and the auxiliary belt structure (50), the cushion layer (60) being preferably formed of a relatively stiff rubber having a modulus of elasticity in a range of from 19 to 22 MPa.

14. The pneumatic tire of at least one of the previous claims wherein the tire (10) is an aircraft tire, preferably a radial aircraft tire.

## Patentansprüche

1. Luftreifen, der eine Karkasse (22) und eine Gürtelverstärkungsstruktur (30) hat, wobei die Gürtelverstärkungsstruktur (30) eine Hauptgürtelstruktur (40) umfasst, die eine erste Gürtelschicht (42) enthält, deren Korde unter einem Winkel von 10 Grad oder weniger, vorzugsweise 5 Grad oder weniger, in Bezug auf die Mittelumfangsebene des Reifens (10) angeordnet sind, und eine erste Zick-Zack-Gürtelverstärkungsstruktur (44, 46, 48), wobei die erste Zick-Zack-Gürtelverstärkungsstruktur aus mindestens zwei Schichten von Korden (44, 46, 48) gebildet ist oder besteht, wobei die Korde in diesen wenigstens zwei Schichten von Korden (44, 46, 48) unter einem Winkel in einem Bereich von 5 bis 30 Grad in Bezug auf die Mittelumfangsebene des Reifens (10) geneigt sind und sich abwechselnd auf Wendepunkte an jeder Seitenkante der jeweiligen Kordschicht (44, 46, 48) erstrecken, wobei die erste Zick-Zack-Gürtelverstärkungsstruktur breiter als die erste Gürtelschicht (42) ist, wobei die Gürtelverstärkungsstruktur eine Schutzgürtelstruktur (70) umfasst, die radial außerhalb der Hauptgürtelstruktur (40) angeordnet ist, **dadurch gekennzeichnet, dass** die Schutzgürtelstruktur (70) ein geodätischer Gürtel ist.

2. Luftreifen nach Anspruch 1, wobei die Gürtelverstärkungsstruktur (30) ferner eine Hilfsgürtelstruktur (50) umfasst, die radial außerhalb der Hauptgürtelstruktur (40) angeordnet ist, wobei die Hilfsgürtelstruktur (50) ein Zick-Zack-Gürtel ist, und wobei die Schutzgürtelstruktur (70) radial außerhalb der Hilfsgürtelstruktur (50) angeordnet ist.

3. Luftreifen nach Anspruch 1 oder 2, wobei die erste Zick-Zack-Gürtelverstärkungsstruktur (44, 46, 48) radial außerhalb der ersten Gürtelschicht (42) angeordnet ist.

4. Luftreifen nach Anspruch 1 oder 2, wobei die erste Gürtelschicht (42) durch das spiralförmig Aufwickeln der Korde gebildet wird oder aus spiralförmig aufgewickelten Korden besteht.

5. Luftreifen nach mindestens einem der vorhergehenden Ansprüche, wobei die Schutzgürtelstruktur (70) aus Nylonkorde gebildet ist oder Nylonkorde umfasst.

6. Luftreifen nach mindestens einem der vorhergehenden Ansprüche, wobei die Schutzgürtelstruktur (70) aus einem aus Nylon und Aramid zusammengeführten Kord gebildet ist oder einen aus Nylon und Aramid zusammengeführten Kord umfasst.

7. Luftreifen nach Anspruch 2, wobei die Hilfsgürtelstruktur (50) aus Nylonkorden gebildet ist oder Nylonkorde aufweist.

8. Luftreifen nach Anspruch 2, wobei die Hilfsgürtelstruktur (50) aus einem aus zwei Nylonkorden und einem Aramidkord zusammengeführten Kabel gebildet ist oder ein aus zwei Nylonkorden und einem Aramidkord zusammengeführtes Kabel umfasst.

9. Luftreifen nach mindestens einem der vorhergehenden Ansprüche, wobei die Hauptgürtelstruktur (40) aus einem aus zwei Aramidkorden und einem Nylonkord zusammengeführten Kabel gebildet ist oder ein aus zwei Aramidkorden und einem Nylonkord zusammengeführtes Kabel umfasst.

10. Luftreifen nach mindestens einem der vorhergehenden Ansprüche, wobei die Schutzgürtelstruktur (70) aus Aramidkorden gebildet ist oder Aramidkorde umfasst.

11. Luftreifen nach mindestens einem der vorhergehenden Ansprüche, wobei die Schutzgürtelstruktur (70) aus Aramid- und Nylonkorden gebildet ist oder Aramid- und Nylonkorde umfasst.

12. Luftreifen nach mindestens einem der vorhergehenden Ansprüche, wobei die Schutzgürtelstruktur (70) aus einem Aramid- und zwei Nylonkorden gebildet ist oder ein Aramid- und zwei Nylonkorde umfasst.

13. Luftreifen nach mindestens einem der vorhergehenden Ansprüche, wobei es zwischen der Schutzgürtelstruktur (70) und der Hilfsgürtelstruktur (50) eine dämpfende Schicht (60) gibt, wobei die dämpfende Schicht (60) vorzugsweise aus einem relativ steifen Kautschuk gebildet ist, der ein Elastizitätsmodul in einem Bereich von 19 bis 22 MPa hat.

14. Luftreifen nach mindestens einem der vorhergehenden Ansprüche, wobei der Reifen (10) ein Flugzeugreifen, vorzugsweise ein radialer Flugzeugreifen, ist.

## Revendications

1. Bandage pneumatique qui possède une carcasse (22) et une structure de renforcement de ceinture (30), la structure de renforcement de ceinture (30) comprenant une structure de ceinture principale (40) qui englobe une première couche de ceinture (42) possédant des câblés qui sont disposés en formant un angle de 10 degrés ou moins, de préférence de 5 degrés ou moins, par rapport au plan circonférentiel médian du bandage pneumatique (10), une première structure de renforcement de ceinture en zigzag (44, 46, 48), la première structure de renforcement de ceinture en zigzag étant obtenue à partir de ou comprenant au moins deux couches de câblés (44, 46, 48), les câblés dans lesdites au moins deux couches de câblés (44, 46, 48) étant inclinés en formant un angle dans une plage allant de 5 à 30 degrés par rapport au plan circonférentiel médian du bandage pneumatique (10), et s'étendant en alternance jusqu'à des points de retournement à chaque bord latéral de la couche de câblés respective (44, 46, 48) ; dans lequel la première structure de renforcement de ceinture en zigzag est plus large que la première couche de ceinture (42) ; dans lequel la structure de renforcement de ceinture comprend une structure de ceinture de protection (70) qui est disposée, en direction radiale, à l'extérieur de la structure de ceinture principale (40), **caractérisé en ce que** la structure de ceinture de protection (70) est une ceinture géodésique.

2. Bandage pneumatique selon la revendication 1, dans lequel la structure de renforcement de ceinture (30) comprend en outre une structure de ceinture auxiliaire (50) qui est disposée, en direction radiale, à l'extérieur de la structure de ceinture principale (40), dans lequel la structure de ceinture auxiliaire (50) est une ceinture en zigzag ; et dans lequel la structure de ceinture de protection (70) est disposée, en direction radiale, à l'extérieur de la structure de ceinture auxiliaire (50).

3. Bandage pneumatique selon la revendication 1 ou 2, dans lequel la première structure de renforcement de ceinture en zigzag (44, 46, 48) est disposée, en direction radiale, à l'extérieur de la première couche de ceinture (42).

4. Bandage pneumatique selon la revendication 1 ou 2, dans lequel la première couche de ceinture (42) est obtenue à partir d'un enroulement des câblés en une configuration hélicoïdale ou comprend des câblés enroulés en une configuration hélicoïdale.

5. Bandage pneumatique selon au moins une des revendications précédentes, dans lequel la structure de ceinture de protection (70) est obtenue à partir de câblés en nylon ou comprend des câblés en nylon.

6. Bandage pneumatique selon au moins une des revendications précédentes, dans lequel la structure de ceinture de protection (70) est obtenue à partir d'un câblé fusionné de nylon et d'aramide ou comprend un câblé fusionné de nylon et d'aramide.

7. Bandage pneumatique selon la revendication 2, dans lequel la structure de ceinture auxiliaire (50) est obtenue à partir de câblés en nylon ou comprend des câblés en nylon.

8. Bandage pneumatique selon la revendication 2, dans lequel la structure de ceinture auxiliaire (50) est obtenue à partir d'un câble fusionné de deux câblés en nylon et d'un câblé en aramide ou comprend un câble fusionné de deux câblés en nylon et d'un câblé en aramide.

9. Bandage pneumatique selon au moins une des revendications précédentes, dans lequel la structure de ceinture principale (40) est obtenue à partir d'un câble fusionné de deux câblés en aramide et d'un câblé en nylon ou comprend un câble fusionné de deux câblés en aramide et d'un câblé en nylon.

10. Bandage pneumatique selon au moins une des revendications précédentes, dans lequel la structure de ceinture de protection (70) est obtenue à partir de câblés en aramide ou comprend des câblés en aramide.

11. Bandage pneumatique selon au moins une des revendications précédentes, dans lequel la structure de ceinture de protection (70) est obtenue à partir de câblés en aramide et en nylon ou comprend des câblés en aramide et en nylon.

12. Bandage pneumatique selon au moins une des revendications précédentes, dans lequel la structure de ceinture de protection (70) est obtenue à partir d'un câblé en aramide et de deux câblés en nylon ou comprend un câblé en aramide et deux câblés en nylon.

13. Bandage pneumatique selon au moins une des revendications précédentes, dans lequel on prévoit une couche d'amortissement (60) entre la structure de ceinture de protection (70) et la structure de ceinture auxiliaire (50), la couche d'amortissement (60) étant de préférence obtenue à partir d'un caoutchouc relativement rigide qui possède un module d'élasticité dans une plage allant de 19 à 22 MPa.

14. Bandage pneumatique selon au moins une des revendications précédentes, dans lequel le bandage pneumatique (10) est un bandage pneumatique pour avion, de préférence un bandage pneumatique pour avion du type à carcasse radiale.
